# EUROPEAN PATENT SPECIFICATION

(11) **EP 0 970 969 B1**
(45) Date of publication and mention of the grant of the patent: **14.05.2003**
(21) Application number: 98905790.6
(22) Date of filing: 06.03.1998
(51) Int. Cl.: C08F 2/08, C08F 12/08, C08F 20/04, C08F 20/18, C08F 22/02

(54) **PROCESS FOR PRODUCING FINE POLYMER PARTICLES**
VERFAHREN ZUR HERSTELLUNG FEINER POLYMERTEILCHEN
PROCEDE DE PRODUCTION DE PARTICULES POLYMERES FINES

(30) Priority: 28.03.1997 JP 7684497
(43) Date of publication of application: 12.01.2000
(73) Proprietor: Kao Corporation, Tokyo 103-0025 (JP)
(72) Inventor: NAKAMURA, Genichi, Kao Corporation, Wakayama-shi, Wakayama 640-8404 (JP); SASAKI, Yasushi, Kao Corporation, Wakayama-shi, Wakayama 640-8404 (JP); TANAKA, Nobushige, Kao Corporation, Wakayama-shi, Wakayama 640-8404 (JP)
(74) Representative: Kraus, Walter, Dr.
(86) International application number: JP9800927
(87) International publication number: WO98044006

(56) References cited:
- JP-A- 1 038 404

## Description

### Technical Field

The present invention relates to a process for producing polymer fine particles. More specifically, it relates to a process for producing polymer fine particles having a narrow particle size distribution, having hydrophobic surfaces and useful as cosmetics, information materials, paints, lubricants easily at low costs.

### Background of the Invention

A method for producing polymer fine particles by the polymerization in a solvent that dissolves a monomer but does not dissolve a polymer in the presence of an appropriate dispersant is known.

This method is called a dispersion polymerization method, and characterized in that polymer fine particles having a narrow particle size distribution are obtained at high concentrations in a relatively short period of time by selecting appropriate conditions.

With respect to this dispersion polymerization method, it is known, for example, that particles having hydrophobic surfaces are obtained by using a dispersant containing a silicone in at least one member of a solvent selected from the group consisting of hydrocarbon compounds and/or silicone compounds.

Specifically, JP-A 47-4084 discloses a method in which a mercapto-modified silicone is used as a dispersant. Further, a method is known in which a block copolymer (for example, "Dispersion Polymerization in Organic Media", compiled by K. E. J. Barrett, John Wiley & Sons, 1975) or a graft copolymer (for example, JP-A 8-269332) of a silicone and a vinyl polymer is used as a dispersant. Further, R. H. Pelton et al. have reported that an unmodified silicone or a vinyl-modified silicone is used as a dispersant (J. Colloid and Interface Sci., 1990, 137(1), p. 120 - 7).

Besides, in the general dispersion polymerization, an example of using a macromonomer having a polymerizable group such as a methacrylate or a polymer (macro-initiator) having a radical initiation group such as azo, a peroxide has been also reported (for example, H. Uyama, et al., Makromol. Chem., 1992, 193(9), pp. 2355 - 62, U. Yildiz et al., Angew. Makromol. Chem., 1995, 231, pp. 135 - 44).

However, the conditions under which the dispersion can stably be maintained all during the polymerization were limited, and it was difficult to produce polymer fine particles having desired particle diameter, distribution and surface properties (for example, a hydrophobic nature).

In addition, a dispersant used was a special one, and it was disadvantageous in view of the easiness and costs.

Accordingly, the subject of the present invention is to provide a process for producing polymer fine particles having a narrow particle size distribution and having hydrophobic surfaces easily at low costs.

Under these circumstances, the present inventors have assiduously conducted investigations, and have consequently found that polymer fine particles having a narrow particle size distribution and having hydrophobic surfaces are stably obtained by conducting the dispersion polymerization in at least one member of a solvent selected from the group consisting of hydrocarbon compounds and silicone compounds using a highly general-purpose amino-modified silicone as a dispersant. This finding has led to the completion of the present invention.

That is, the present invention is to provide a process for producing polymer fine particles, characterized in that the dispersion polymerization of a vinyl monomer is conducted in at least one member of a solvent selected from the group consisting of hydrocarbon compounds and silicone compounds using an amino-modified silicone as a dispersant.

### Disclosure of the Invention

The present invention is disclosed below.

### [Amino-modified silicone]

The amino-modified silicone used in the present invention may be one having a specific structure, but a general-purpose one available in market is sufficient. With respect to general-purpose amino-modified silicones, there are differences in the member of the modifying group, its site, the degree of substitution and the degree of polymerization. As the type of the modifying group, a group represented by the following formula (I) is preferably used. 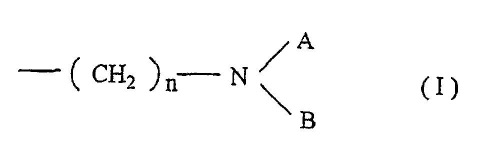 [wherein n is an integer of from 3 to 20, A and B are the same or different, and each represents a hydrogen atom, a hydrocarbon group having from 1 to 22 carbon atoms which group may have a hydroxyl group, or an aminoalkyl group having from 1 to 22 carbon atoms which group may have a hydroxyl group.]

As specific examples of such modifying groups may be mentioned a 3-aminopropyl group, an N-(2-aminoethyl)-3-aminopropyl group, an N-(2-dimethylaminoethyl)-3-aminopropyl group, an N-alkyl (from 1 to 22 carbon atoms) aminopropyl group, an N,N-dimethylaminopropyl group and an N,N-bis (2-hydroxyethyl) -3-aminopropyl group. Of these, a 3-aminopropyl group, an N-(2-aminoethyl)-3-aminopropyl group and an N-(2-dimethylaminoethyl)-3-aminopropyl group are preferable, and a 3-aminopropyl group is especially preferable from the standpoint of the easy procurement.

As a substitution site of the modifying group, there are a side chain, both ends and one end of a silicone chain. In the process of the present invention, the amino-modified silicone modified at any of these modification sites can preferably be used.

Further, the amino-modified silicone used in the present invention may be co-modified with the other modifying group, for example, a phenyl group, an alkyl group or a polyether group unless the gist of the present invention is deviated.

The degree of substitution (amine equivalent) of the amino-modified silicone used in the present invention is not particularly limited. However, when the amine equivalent is too small, the solubility in the dispersion medium is decreased. Consequently, the unstable dispersion sometimes occurs. Further, when the amine equivalent is too large, the particle size distribution of the resulting particles is, in some cases, broadened or matters adhering to a reactor are increased. Accordingly, the amine equivalent is preferably between 300 and 50,000 g/mol, more preferably between 1,000 and 20,000 g/mol. Still further, there is generally a tendency that the larger the amine equivalent, the larger the diameter of the resulting particles.

Incidentally, in the present invention, the amine equivalent of the amino-modified silicone was determined through the potentiometric titration with hydrochloric acid in a chloroform/methanol (volume ratio 1/1) solution.

The degree of polymerization (viscosity) of the amino-modified silicone used in the present invention is not particularly limited. However, when the viscosity is too low, the dispersion stability is decreased. When it is too high, the operability in the production is worsened. Therefore, the viscosity at 25°C is preferably between 50 and 1, 000, 000 cs, more preferably between 1,000 and 100,000 cs. There is generally a tendency that the higher the viscosity of the amino-modified silicone used, the smaller the diameter of the resulting particles.

Further, in the present invention, the viscosity of the amino-modified silicone was measured with a Brookfield viscometer when the viscosity (25°C) of the sample measured was less than 100,000 cs, and with an E-type viscometer when the viscosity (25°C) of the sample measured was 100,000 cs or more.

In the present invention, the amount of the amino-modified silicone used as the dispersant is appropriately selected in view of the stability of the system and the characteristics (particle diameter and surface properties) required for particles formed. However, when the amount of the dispersant is insufficient, the dispersion stability is decreased. When it is too large, this is not economical. Therefore, usually, it is preferable that the amount of the dispersant is between 0.1 and 20% by weight based on the vinyl monomer. Further, there is generally a tendency that the larger the amount of the amino-modified silicone used, the smaller the diameter of the particles obtained.

### [Solvent]

The solvent used in the present invention is one member or a mixture of two or more members selected from the group consisting of hydrocarbon compounds and silicone compounds. As specific examples of such solvents may be mentioned aliphatic hydrocarbon compounds such as hexane, heptane, dodecane, cyclohexane, methylcyclohexane, isooctane and hydrogenated triisobutylene ; aromatic hydrocarbon compounds such as benzene, toluene, xylene and ethylbenzene ; and silicone compounds such as octamethylcyclotetrasiloxane, decamethylcyclopentasiloxane, hexamethyldisiloxane and octamethyltrisiloxane.

Of these solvents, one member or a mixture of two or more members selected from the group consisting of hexane, heptane, cyclohexane, toluene, octamethylcyclotetrasiloxane and decamethylcyclopentasiloxane is preferable.

The member of the solvent is an important factor that influences the size of the particles formed or the dispersion stability. There is generally a tendency that the higher the affinity for the resulting polymer, the larger the particle size of particles formed. The affinity between the polymer and the solvent can be known from, for example, a difference in a solubility parameter. However, this is not applicable in many cases.

In the present invention, another polar solvent can be added for the control of the particle size unless the gist of the present invention is deviated. As specific examples of polar solvent may be mentioned halogenated alkyls such as chloroform and trichloroethane ; esters such as ethyl acetate and isoamyl acetate ; ketones such as acetone, cyclohexanone and the like; ethers such as tetrahydrofuran and dioxane ; alcohols such as methanol and ethanol aprotic polar solvents such as dimethylformamide and dimethyl sulfoxide.

### [Vinyl monomer]

The vinyl monomer used in the present invention is not particularly limited, and an ordinary radical-polymerizable vinyl monomer is preferably used. Specific examples of such a vinyl monomer include styrene, an alkyl (meth) acrylate whose alkyl group has 1 to 22 carbon atoms, (meth)acrylonitrile, acrylamide, vinyl acetate and vinylpyrrolidone. Styrene and an alkyl (meth)acrylate are preferable.

These vinyl monomers can be polymerized or copolymerized either singly or as a mixture of two or more members. In the copolymerization, the problems such as the decrease in the polymerization rate, the broadening of the particle size distribution, the formation of particles with the irregular shape, the occurrence of the unstable dispersion sometimes occur because the rate of consumption of the monomer greatly differs depending on factors such as a monomer reactivity ratio, a distribution coefficient between a polymer phase and a solvent phase and a diffusion coefficient.

Further, for the purpose of controlling the surface properties of particles formed or imparting the reactivity, it is also possible to homopolymerize or copolymerize a vinyl monomer, examples thereof being α,β-unsaturated carboxylic acids such as (meth)acrylic acid, maleic acid and itaconic acid , maleic anhydride, chloromethylstyrene, glycidyl (meth)acrylate, (meth)acryloyloxyethyl isocyanate, 3-(trimethoxysilyl)propyl (meth)acrylate, dimethylaminoethyl (meth)acrylate, hydroxyethyl (meth)acrylate and vinyl pyridine.

Especially preferable is that the vinyl monomer is a mixture of two or more members selected from the α,β-unsaturated carboxylic acids and the esters thereof, or a mixture of styrene and at least one member of the α,β-unsaturated carboxylic acids and the esters thereof.

Of these vinyl monomers, those having the acid group, the acid anhydride group, the halogenated alkyl group, the epoxy group and the isocyanate group can form a graft polymer by being bound to the amino-modified silicone, whereby there are effects that the dispersion stability is increased and the diameter of the particles formed is decreased. Since, especially, the α,β-unsaturated carboxylic acids have a great effect of stabilizing the dispersion, a stable dispersion system is provided by copolymerizing a small amount thereof in the polymerization of styrene or an alkyl (meth)acrylate.

When the α,β-unsaturated carboxylic acid is added to stabilize the dispersion, it is advisable that the amount thereof is equal to, or larger than, that of the amino group of the amino-modified silicone as dipersant.

In the process of the present invention, a crosslinkable vinyl monomer such as divinylbenzene or ethylene glycol dimethacrylate can also be used to obtain high-strength or insoluble particles. When the crosslinkable vinyl monomer is used, the rate of polymerization is, in some cases, decreased or the particle size distribution is broadened. Accordingly, in order to obtain particles having a higher strength, it is preferred that the dispersion polymerization is conducted by use of a monomer having a reactive group other than the vinyl group, and a functional group in the side chain is then crosslinked in the macromolecular reaction.

In the process of the present invention, a chain transfer agent may be used in order to control the molecular weight or the particle diameter. As specific examples of such chain transfer agents may be mentioned mercaptans such as butyl mercaptan, mercaptoethanol, thioglycolic acid and dodecanethiol, carbon tetrachloride, carbon tetrabromide, dimethylaniline, cumene and α-methylstyrene dimer.

There is generally a tendency that, when the chain transfer agent is used, the particle diameter is increased. In selecting the chain transfer agent, the distribution coefficient of the polymer phase and the solvent phase has to be considered in addition to the ordinary chain transfer coefficient.

### [Monomer concentration]

In the process of the present invention, the concentration of the vinyl monomer in the reaction system varies depending on a solvent and a dispersant used. When the monomer concentration is too low, the polymerization proceeds slowly, and it is uneconomical. When the monomer concentration is too high, it sometimes gives rise to problems such as the unstable dispersion, the broadening of the particle size distribution, the occurrence of the vigorous polymerization reaction. As a result, usually, it is preferably between 1 and 50% by weight, more preferably between 2 and 30% by weight. The monomer concentration is also a factor that changes the particle diameter. There is generally a tendency that the higher the monomer concentration is, the larger the particle diameter becomes.

In order to obtain the dispersion having the high concentration with avoiding the above-mentioned problems, it is advisable that the polymerization is conducted with the vinyl monomer being continuously charged into a reaction system. In general, a monomer is a good solvent of a polymer formed. Accordingly, when it is charged as such without being diluted, the agglomeration occurs in many cases. In this case, a monomer is charged after having being diluted with a solvent. In this special embodiment, it is possible that the dispersion polymerization is conducted under reflux of a solvent and a monomer diluted with a condensate is charged.

The concentration of the monomer to be charged is preferably 50% by weight or less, more preferably 30% by weight or less, though it can somewhat be varied with polymerization conditions adopted . Further, in order to obtain polymer fine particles having a narrow particle size distribution, it is advisable that the monomer concentration in the reaction system is 30% by weight or less, preferably 20% by weight or less and is controlled without the abrupt change as much as possible. In the ordinary dispersion polymerization, the rate of polymerization is increased in proportion to the weight of particles already formed. Accordingly, it is advisable that the vinyl monomer is charged relatively slowly in the initial stage and quickly in the latter stage.

### [Initiator]

Generally, the polymerization initiator used in the process of the present invention may be a known product. For example, initiators of peroxide compounds such as lauroyl peroxide, benzoyl peroxide, tert-butyl peroxypivalate and diisopropyl peroxydicarbonate; and initiators of azo compounds such as azobis(isobutylonitrile), azobis(2,4-dimethylvaleronitrile), azobis(dimethyl isobutyrate) and azobis(cyclohexanecarbonitrile) are preferably used.

When the half-value period of the initiator at the polymerization temperature is too short, the conversion ratio is, in some cases, not increased or the particle size distribution is broadened. When the half-value period is too long, it gives rise to problems that the polymerization proceeds slowly and a large amount of the initiator remains even after the completion of the polymerization. Accordingly, it is advisable that the half-value period at the polymerization temperature is selected to be between 0.5 and 10 hours. It is also possible to continuously charge the initiator into the reaction system at such a temperature that the half-value period of the initiator is a short time of 3 hours or less.

In the dispersion polymerization, it is generally known that the initiator of the peroxide compound allows the formation of a graft polymer and increases the dispersion stability by removal of hydrogen from the dispersant. However, in the process of the present invention in which the dispersion polymerization is conducted in at least one member of the solvent selected from the group consisting of hydrocarbon compounds and/or silicone compounds, using the amino-modified silicone as a dispersant, the dispersion can be maintained stably even in the initiator of the azo compound.

The amount of the initiator used is not particularly limited. However, when the amount of the initiator is too large, it is uneconomical. When it is too small, the polymerization proceeds slowly. Further, when it is either too small or too large, the particle size distribution is broadened, or the dispersion stability is decreased. Accordingly, it is preferably between 0.1 and 10% by weight, more preferably between 0.2 and 5% by weight based on the monomer. There is generally a tendency that the larger the amount of the initiator is, the larger the diameter of the particles formed is.

The method for adding the initiator is not particularly limited. However, since there is a need to unify the conditions of the nucleation step in the initial stage of the dispersion polymerization for controlling the particle diameter, it is advisable that the addition of the initiator in a necessary amount is completed after the other starting materials are previously charged and the mixture is kept at a desired temperature and before the nucleation occurs.

### [Polymerization conditions]

In the process of the present invention, the polymerization temperature has to be carefully selected depending on the decomposition rate of the initiator, the affinity between the monomer and the solvent. It is preferably between room temperature and 150°C, more preferably between 50 and 120°C. Since the polymerization temperature is also one of the factors that change the particle diameter, it is advisable to adjust the same as a fixed temperature. The reaction under reflux of the solvent is advantageous in that the temperature control and the removal of the polymerization heat can easily be conducted.

The polymerization time is appropriately selected according to the half-value period of the initiator and the reactivity of the monomer. It is usually from 2 hours to 48 hours.

Since the polymerization inhibitor contained in the monomer or the residual amount of oxygen sometimes greatly changes the diameter of the particles formed in the dispersion polymerization, it is advisable to control the amount of the polymerization inhibition (retardation) factor more than when conducting the usual radical polymerization.

The stirring conditions are not particularly limited. However, when the stirring is conducted either too fast or too slowly, the dispersion tends to be unstable. It is advisable to conduct the stirring so that the whole system is mixed without exerting strong shear.

In the process of the present invention, various additives can coexist for producing functional particles unless a bad effect is given to the dispersion polymerization. Specific examples of such additives include a plasticizer, a dye and a flavor.

Thus, according to the process of the present invention, a dispersion of polymer fine particles having a narrow particle size distribution in the range of from 0.3 to 20 µm can stably be obtained in a high yield. Especially in the process of the present invention, particles having a relatively large particle diameter of 1 µm or more can stably be produced.

The dispersion of polymer fine particles obtained by the present invention can be used as such or by being formed into a dispersion in another solvent through solvent substitution. Further, it can be formed into a powder by a known method, for example, solid-liquid separation such as centrifugation and filtration, and drying.

The particles obtained by the process of the present invention have a low surface energy that is a characteristic feature of the amino-modified silicone as a dispersant, and can preferably be used in cosmetics, information materials, paints and lubricants.

The reason that the dispersion of the polymer fine particles which are stable in a wide range is obtained by the process of the present invention is not necessarily clarified. However, this is presumably because not only the grafting by removal of hydrogen deemed to be effective in the general dispersion polymerization and the ionic group interaction but also the peculiar interaction between hydrocarbon compounds and/or silicone compounds and the amino-modified modified silicone exist.

### Examples

The present invention is illustrated more specifically below by referring to Examples.

### Example 1

A 500-ml four-necked flask fitted with a condenser, a thermometer and a stirrer was purged with nitrogen. Then, 90 g of n-hexane, 90 g of toluene and 0.4 g of an amino-modified silicone (side chain 3-aminopropyl-type, viscosity (viscosity at 25°C, the same applies hereinafter) 50,000 cs, amine equivalent 5,000 g/mol) were charged, and heated to 70°C. 20 g of methyl methacrylate, 0.02 g of methacrylic acid and 0.4 g of lauroyl peroxide were added, and the mixture was reacted at 70°C for 16 hours. Although the reaction system was uniform in the initial stage, it showed a bluish white color approximately 45 minutes after charging the initiator. Thereafter, it turned to a white emulsion.

The reaction solution was allowed to cool, then diluted with 200 g of n-hexane, and subjected to solid-liquid separation through centrifugation. A washing step of redispersing the residue in 300 g of n-hexane and then conducting centrifugation was carried out twice, and vacuum drying was conducted with a drier at 50°C to obtain 15.0 g of a white powder.

The resulting particles were observed with SEM in a usual manner. The diameters of 50 particles were measured, and the average particle diameter and the coefficient of variation (CV value (%) = [standard deviation] × 100/[number average particle diameter]) were calculated. As a result, they are 5.0 µm and 6.1% respectively.

### Examples 2 to 10

Polymer fine particles were synthesized in the same manner as in Example 1 except that the solvent composition and the member of the dispersant were changed as shown in Table 1. The results are shown in Table 1.

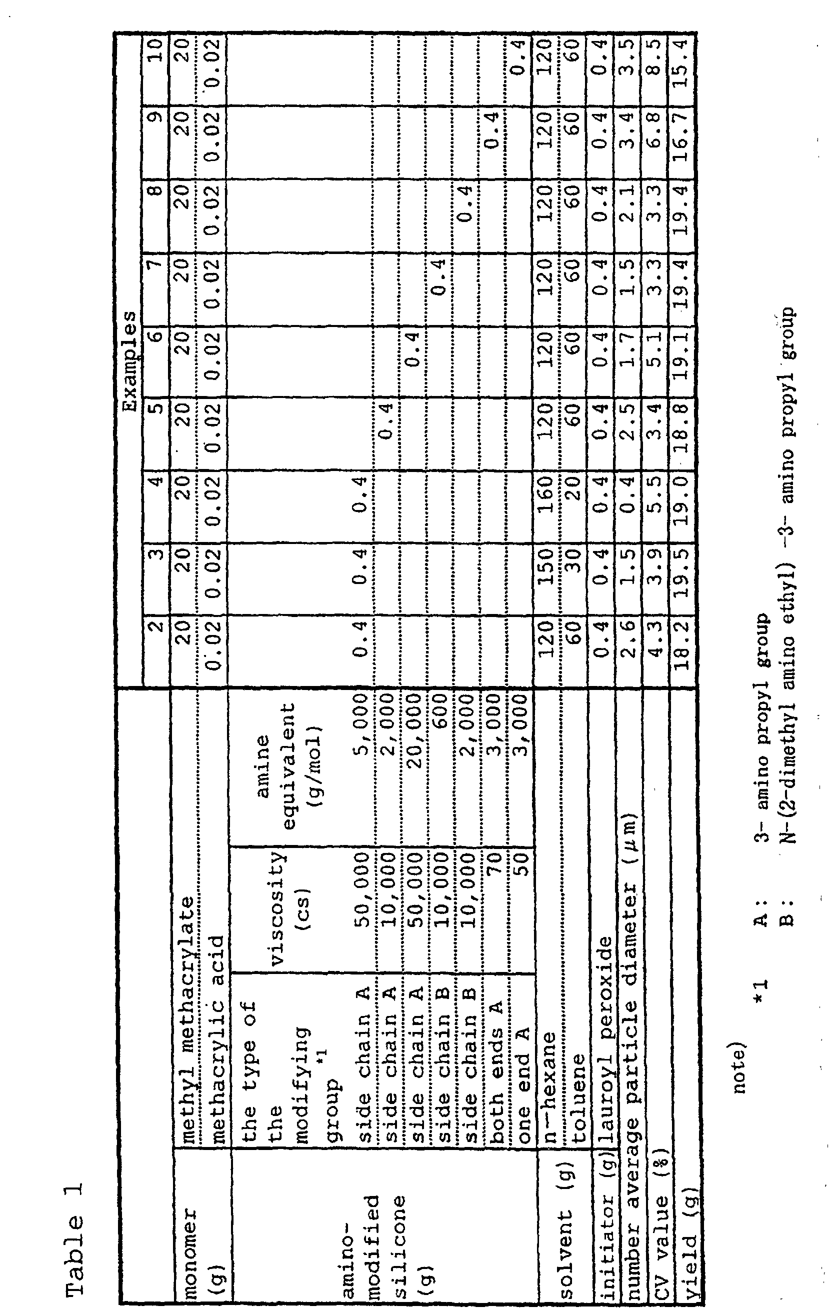

### Examples 11 to 14

Polymer fine particles were obtained under the conditions shown in Table 2 in the same manner as in Example 1. The results are shown in Table 2.

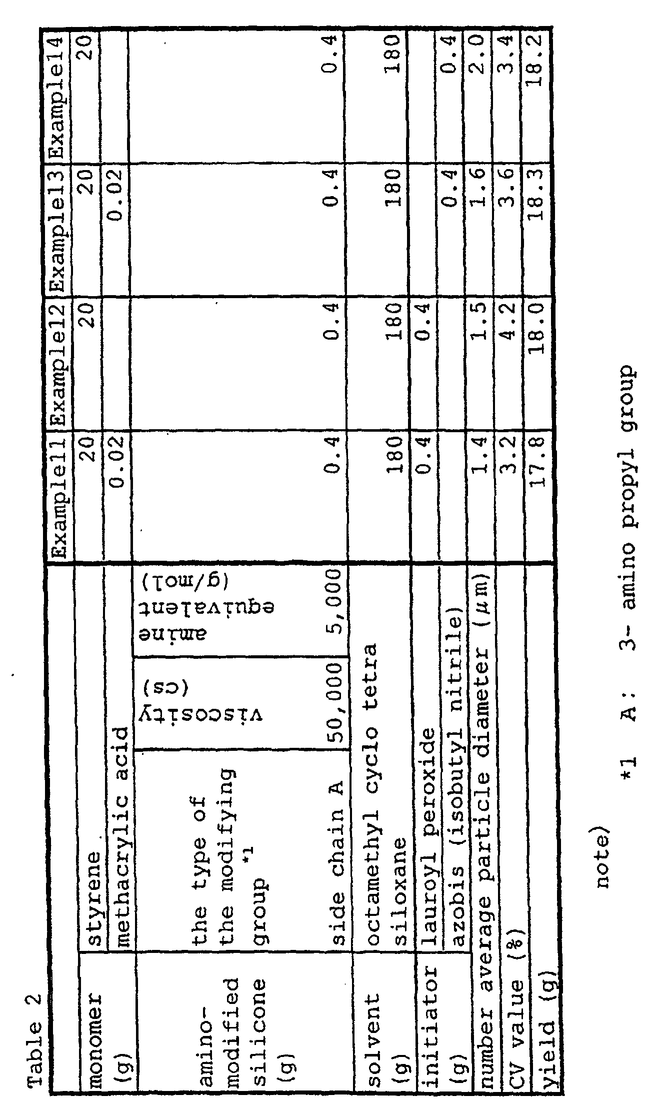

As is apparent from Table 2, the polymer fine particles were obtained stably in the process of the present invention irrespective of the member of the initiator and the presence or absence of the functional monomer. Especially, even when using an initiator composed of an azo compound that hardly causes a grafting reaction and styrene that hardly causes an interaction with an amino group as a monomer, the dispersion polymerization could be conducted stably.

### Examples 15 to 19

A 1-liter four-necked flask fitted with a condenser, a thermometer and a stirrer was charged with 6.4 g or 1.6 g of an amino-modified silicone (side chain 3-aminopropyl-type, viscosity 50,000 cs, amine equivalent 5,000 g/mol) and 432 g of cyclohexane. The mixture was heated to approximately 80°C, and slowly refluxed. A styrene/methyl methacrylate mixture (in total 80 g) having a composition shown in Table 3, 0.02 g of methacrylic acid and 0.8 g of lauroyl peroxide were added. While the mixture was keeping the gentle reflux, a cyclohexane solution (2.4 g/48 g) of lauroyl peroxide was added dropwise over the course of 6 hours. Further, the reaction was conducted at the same temperature for 2 hours, and polymer fine particles were then obtained in the same manner as in Example 1. The results are shown in Table 3.

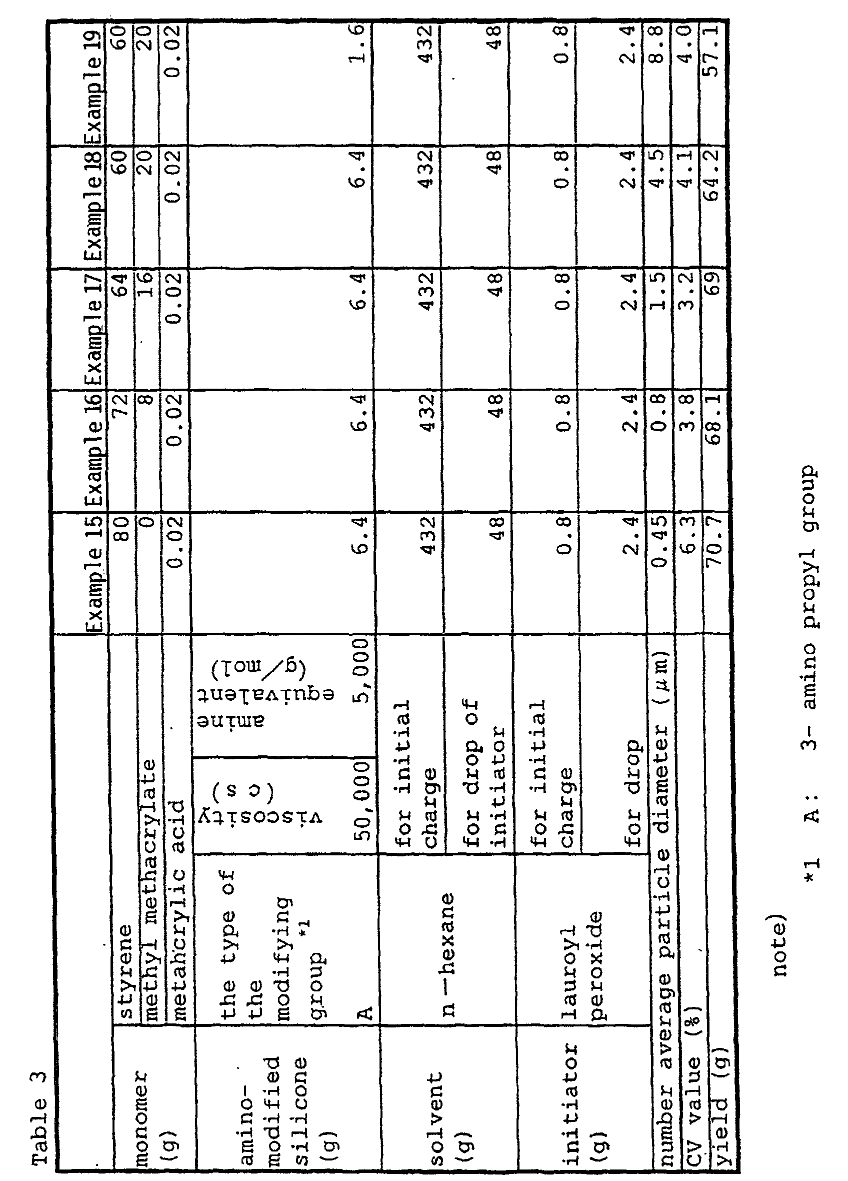

### Examples 20 and 21

The dropwise polymerization was conducted with a composition shown in Table 4 under reflux of a solvent, diluting a monomer to 30% by weight or less with a condensate and maintaining the monomer concentration in a reaction system so as not to exceed 20% by weight. The results are shown in Table 4.

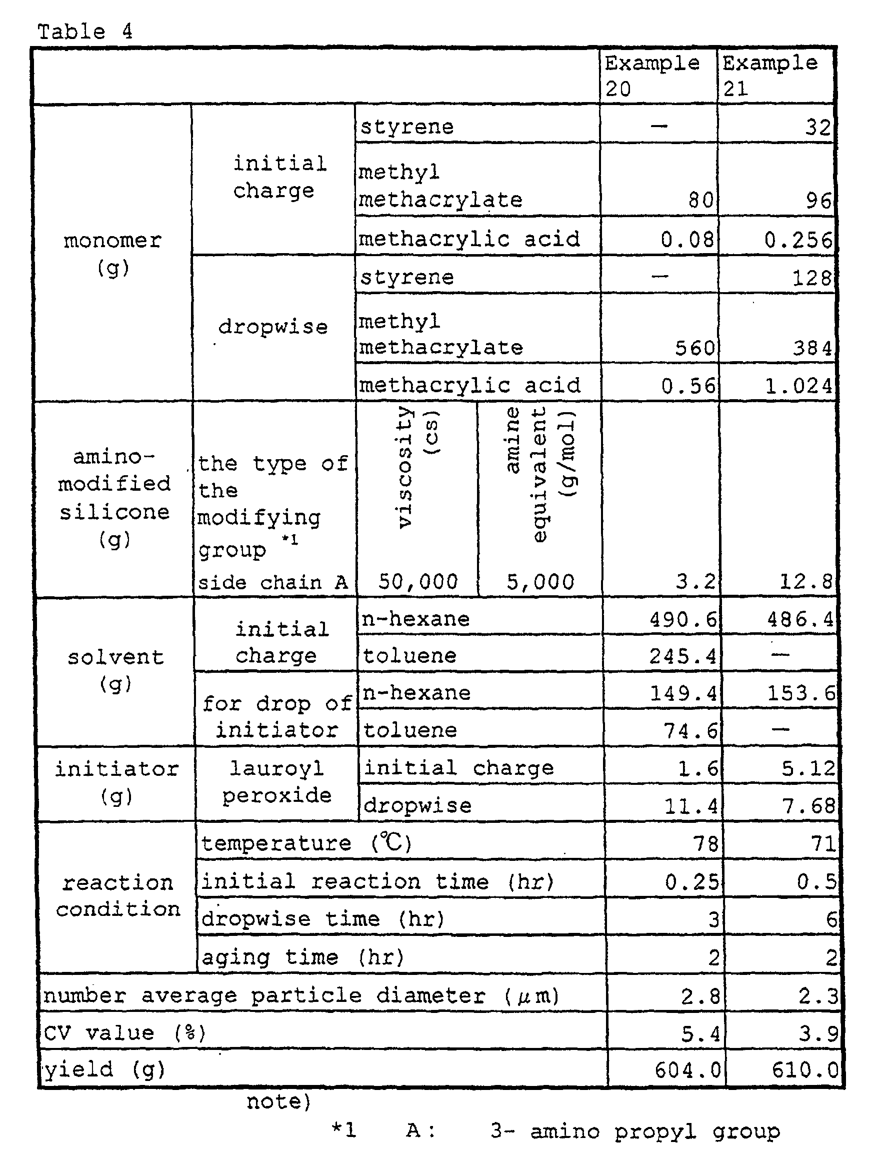

As is apparent from Table 4, the polymer fine particles were obtained at a high concentration of 50% by weight or more in a high yield in a short period of time by employing a method for continuously feeding a vinyl monomer to a reaction system.

## Claims

1. A process for producing polymer fine particles, which comprises dispersion-polymerizing a vinyl monomer in at least one solvent selected from the group consisting of hydrocarbon compounds and silicone compounds using an amino-modified silicone as a dispersant.

2. The process as claimed in Claim 1, wherein the amine equivalent of the amino-modified silicone is between 300 and 50,000 g/mol.

3. The process as claimed in Claim 1, wherein the viscosity at 25°C of the amino-modified silicone is between 50 and 1, 000, 000 cs.

4. The process as claimed in Claim 1, wherein the solvent is at least one member selected from the group consisting of hexane, heptane, cyclohexane, toluene, octamethylcyclotetrasiloxane and decamethylcyclopentasiloxane.

5. The process as claimed in Claim 1, wherein the vinyl monomer is at least one member selected from the group consisting of styrene, an alkyl acrylate and an alkyl methacrylate.

6. The process recited in Claim 1 or 5, wherein the vinyl monomer is an α,β-unsaturated carboxylic acid and another vinyl monomer.

7. The process as claimed in Claim 1, wherein the vinyl monomer is charged into the reaction system so that the concentration of the vinyl monomer is always maintained at 30% by weight or less in the reaction system.

8. The process as claimed in Claim 1, wherein the vinyl monomer is an α,β-unsaturated carboxylic acid or its ester.

9. The process as claimed in Claim 1, wherein two or more members of vinyl monomers selected from an α,β-unsaturated carboxylic acid and its ester are dispersion-polymerized in at least one member of a solvent selected from aliphatic hydrocarbon compounds using the amino-modified silicone having formula (I) as a dispersant; 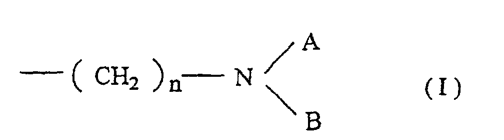 [wherein n is an integer of from 3 to 20, A and B are the same or different, and each represents a hydrogen atom, a hydrocarbon group having from 1 to 22 carbon atoms which group may have a hydroxyl group, or an aminoalkyl group having from 1 to 22 carbon atoms which group may have a hydroxyl group.] .

## Patentansprüche

1. Verfahren zur Herstellung feiner Polymerteilchen, umfassend Dispersions-Polymerisieren eines Vinylmonomeren in mindestens einem Lösungsmittel, ausgewählt aus der Gruppe, bestehend aus Kohlenwasserstoff-Verbindungen und Silikonverbindungen, unter Verwendung eines Aminomodifizierten Silikons als Dispergiermittel.

2. Verfahren nach Anspruch 1, wobei das Aminäquivalent des aminomodifizierten Silikons zwischen 300 und 50.000 g/mol liegt.

3. Verfahren nach Anspruch 1, wobei die Viskosität des aminomodifizierten Silikons bei 25°C zwischen 50 und 1.000.000 cs liegt.

4. Verfahren nach Anspruch 1, wobei das Lösungsmittel mindestens ein Glied, ausgewählt aus der Gruppe, bestehend aus Hexan, Heptan, Cyclohexan, Toluol, Octamethylcyclotetrasiloxan und Decamethylcyclopentasiloxan, ist.

5. Verfahren nach Anspruch 1, wobei das Vinylmonomer mindestens ein Glied, ausgewählt aus der Gruppe, bestehend aus Styrol, einem Alkylacrylat und einem Alkylmethacrylat, ist.

6. Verfahren nach Anspruch 1 oder Anspruch 5, wobei das Vinylmonomer eine α,β-ungesättigte Carbonsäure und ein anderes Vinylmonomer ist.

7. Verfahren nach Anspruch 1, wobei das Vinylmonomer so in das Reaktionssystem eingeführt wird, dass die Konzentration des Vinylmonomeren im Reaktionssystem immer bei 30 Gew.-% oder weniger gehalten wird.

8. Verfahren nach Anspruch 1, wobei das Vinylmonomer eine α,β-ungesättigte Carbonsäure oder ihr Ester ist.

9. Verfahren nach Anspruch 1, wobei zwei oder mehrere Glieder von Vinylmonomeren, ausgewählt aus einer α,β-ungesättigten Carbonsäure und ihrem Ester, in mindestens einem Glied eines Lösungsmittels, ausgewählt aus aliphatischen Kohlenwasserstoffverbindungen, unter Verwendung des aminomodifizierten Silikons mit der Formel (I) als Dispergiermittel Dispersions-polymerisiert werden: 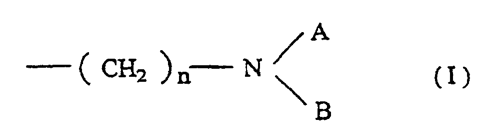 [worin n eine ganze Zahl von 3 bis 20 ist, A und B gleich oder unterschiedlich sind und jeweils ein Wasserstoffatom, eine Kohlenwasserstoffgruppe mit 1 bis 22 Kohlenstoffatomen, wobei jede Gruppe eine Hydroxylgruppe haben kann, oder eine Aminoalkylgruppe mit 1 bis 22 Kohlenstoffatomen, wobei jede Gruppe eine Hydroxylgruppe haben kann, darstellen].

## Revendications

1. Procédé de production de particules polymères fines, qui comprend la polymérisation en dispersion d'un monomère vinylique dans au moins un solvant choisi dans le groupe constitué par des composés hydrocarbonés et des composés siliconés, en utilisant une silicone à modification amino comme dispersant.

2. Procédé suivant la revendication 1, dans lequel l'équivalent aminé de la silicone à modification amino se situe entre 300 et 50 000 g/mol.

3. Procédé suivant la revendication 1, dans lequel la viscosité à 25 °C de la silicone à modification amino est située entre 50 et 1 000 000 cs.

4. Procédé suivant la revendication 1, dans lequel le solvant est au moins un élément choisi dans le groupe constitué par l'hexane, l'heptane, le cyclohexane, le toluène, l'octaméthylcyclotétrasiloxane et le décaméthyl-cyclopentasiloxane.

5. Procédé suivant la revendication 1, dans lequel le monomère vinylique est au moins un élément choisi dans le groupe constitué par le styrène, un acrylate d'alkyle et un méthacrylate d'alkyle.

6. Procédé suivant la revendication 1 ou 5, dans lequel le monomère vinylique est constitué d'un acide carboxylique à insaturation α,β et d'un autre monomère vinylique.

7. Procédé suivant la revendication 1, dans lequel le monomère vinylique est chargé dans le système réactionnel de telle sorte que la concentration en monomère vinylique soit toujours maintenue à 30 % en poids ou moins dans le système réactionnel.

8. Procédé suivant la revendication 1, dans lequel le monomère vinylique est un acide carboxylique à insaturation α,β ou son ester.

9. Procédé suivant la revendication 1, dans lequel deux éléments ou davantage des monomères vinyliques choisis entre un acide carboxylique à insaturation α,β et son ester sont polymérisés en dispersion dans au moins un élément d'un solvant choisi parmi des composés hydrocarbonés aliphatiques en utilisant la silicone à modification amino répondant à la formule (I) comme dispersant : 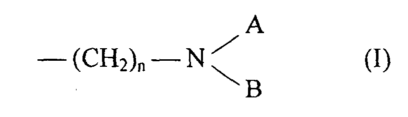 [où n est un nombre entier de 3 à 20, A et B sont identiques ou différents, et représentent chacun un atome d'hydrogène, un groupe hydrocarboné ayant 1 à 22 atomes de carbone, ledit groupe pouvant avoir un groupe hydroxyle ou un groupe aminoalkyle ayant 1 à 22 atomes de carbone, ledit groupe pouvant avoir un groupe hydroxyle].
